# EUROPEAN PATENT APPLICATION

(11) **EP 4 582 690 A1**
(43) Date of publication of application: **09.07.2025**
(21) Application number: 24150503.1
(22) Date of filing: 05.01.2024
(51) Int. Cl.: F03D 13/10, F03D 13/20, F03D 80/50, F03D 80/80

(54) **TOWER OR TOWER SECTION AND WIND TURBINE**

(71) Applicant: Siemens Gamesa Renewable Energy A/S, 7330 Brande (DK)
(72) Inventor: Game, Harshad, Pin-560100 Electronic city phase 1 (IN); Kumar Tinku, Abhiram, 560100 Bengaluru (IN); Lakkisetti, Raviteja, Pin 560100 Bengaluru, Karnataka (IN)
(74) Representative: SGRE-Association

(57) **Abstract**

A tower (6) or tower section (7, 8, 9) for a wind turbine (1), comprising: a tower shell (10), a platform (11), and a plurality of stays (12), each stay (12) connecting the platform (11) to the tower shell (10), wherein each stay (12) is comprised of at least two stay elements (24, 25) arranged in parallel and adjacent to each other, wherein each of the at least two stay elements (24, 25) is connected at its one end (19) to the platform (11) and at its other end (20) to the tower shell (10).

## Description

The present invention relates to a tower or tower section for a wind turbine and to a wind turbine.

The annual energy production of new generations of wind turbines increases continuously. To this end, higher towers are used. Increasing the tower height results in the tower shell diameters also growing. Diameters are now in the range of 6 to 9 m.

It is well known to pre-manufacture tower sections by fitting a tower shell with a platform at both ends. The platforms are respectively connected to the tower shell using a plurality of stays.

During transport of a tower section from the site of pre-manufacture to the erection side of the wind turbine, the tower section is oriented with its longitudinal axis horizontally. The tower shell is made of steel and, due to its large diameter as mentioned above, very heavy. This results in tower ovalization occurring during transport. Tower shell ovalization results further in bending of the stays. During transport of the tower section along bumpy roads or during sea transport, acceleration and deceleration of the tower section occurs which aggravates tower shell ovalization even more.

In a case where one or more of the stays fail during transport, there is a risk of substantial financial loss due to the entire tower section becoming damaged.

It is therefore an object of the present invention to provide an improved tower or tower section for a wind turbine.

Accordingly, there is provided a tower or tower section for a wind turbine, comprising: a tower shell, a platform, and a plurality of stays, each stay connecting the platform to the tower shell, wherein each stay is comprised of at least two stay elements arranged in parallel and adjacent to each other, wherein each of the at least two stay elements is connected at its one end to the platform and at its other end to the tower shell.

The inventors discovered that, when tower shell ovalization occurs, stays get damaged by plastic deformation, i.e., when a stay bends beyond its yield stress. In particular, the inventors found that, for example, stays get deflected by up to 62,5 mm when tower shell ovalization occurs. The stays in this scenario were made of 10 to 12 mm thick flat steel.

The inventors discovered that the problem of plastic deformation could be overcome by reducing the bending moment in the stays. They found that the moment of inertia, which is key to the bending moments which occur in the stays, can be reduced by replacing a single stay by at least two stay elements arranged in parallel and adjacent to each other. The at least two stay elements are connected in the same places as the original single stay to the platform and the tower shell. Surprisingly, the inventors found that this approach resulted in two to three times more maximum bending deflection of the stay being allowed before yield of the stay occurs. On the other hand, the new (combined) stay provides the same tensile strength as the prior art single stay.

According to an embodiment, the at least two stay elements are in contact with each other.

Preferably, there is, when the stay is bent, a slipping or sliding movement allowed at the interface surface between the at least two stay elements which provides for the increased deflection below the yield limit of the stay.

According to an embodiment, at least one spacer element is arranged between the at least two stay elements.

The at least one spacer element can allow for a slipping or sliding movement of the at least two stay elements relative to the at least one spacer element when the stay is bent. Further, the at least one spacer element increases the distance between the at least two stay elements, thus reducing bending moments within the same.

According to a further embodiment, a first washer is arranged between the one ends and a second washer is arranged between the other ends of the at least two stay elements.

The first and second washer are suitable spacer elements.

According to an embodiment, a third strut element is arranged between the at least two strut elements and in parallel therewith.

Preferably, both of the at least two strut elements are configured to slip or slide relative to the third strut element when the stay is bent. Providing the third strut element may also increase the stay's resistance to buckling.

According to a further embodiment, the at least two strut elements are directly fastened two each other at a middle section thereof using bolts passing the third strut element on both sides.

Thus, the third strut element is not connected to the at least two stay elements at the middle section. In one embodiment, there is provided at least one distance element (for example, two washers) which ensure that there is a gap at least in the middle section between either of the at least two stay element and the third stay element to allow for the relative slipping or sliding movement. This may increase the stay's resistance to buckling even more.

According to a further embodiment, there is provided a first bolt which connects the one ends of the at least two stay elements to the platform and a second bolt which connects the other ends of the at least two stay elements to the tower shell.

Thus, the one ends of the at least two stay elements are connected with a same bolt to the platform. The other ends of the at least two stay elements are also connected by another same bolt to the tower shell.

According to a further embodiment, the first bolt passes through a through-hole in the first washer and/or the third stay element and the second bolt passes through a through-hole in the second washer and/or the third stay element.

Thus, the first and second bolt are used to not only connect the at least two stay elements to the platform and tower shell, but also to hold the washers and/or the third stay element in place. Thereby, the number of components is reduced.

According to a further embodiment, the at least two stay elements and/or third stay element are made of flat steel.

The at least two stay elements and/or third stay element may have a thickness of, for example, 5 to 20 mm, or, preferably, 5 to 10 mm.

According to a further embodiment, each of the at least two stay elements is connected at its one end to the platform using an eye bracket and its other end of the tower shell using a bushing.

For example, the eye bracket may be welded to the platform. The bushing may similarly be welded to the inside of the tower shell or may be fastened with a bolt or the first bolt to the tower shell.

According to a further aspect, a wind turbine comprising the tower or tower section as described above is provided.

The advantages and features mentioned in relation to the tower or tower section, equally apply to the wind turbine.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows, in a perspective view, a tower section from the wind turbine of Fig. 1;
Fig. 3 shows a detail III from Fig. 2;
Fig. 4 shows, on the left, the stay of Fig. 3 in a more isolated view, and, on the right, an exploded view of the stay shown on the left of Fig. 4;
Fig. 5 shows a first variant of the stay of Fig. 4; and
Fig. 6 shows a second variant of the stay shown in Fig. 4.

In the Figures, like reference numerals designate like or functionally equivalent elements, unless otherwise indicated.

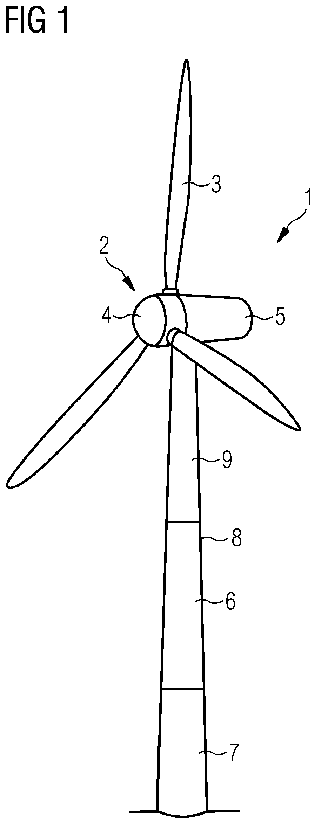

Fig. 1 shows a wind turbine 1 according to an embodiment. The wind turbine 1 comprises a rotor 2 having two or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1.

The tower 6 may be connected to a monopile or concrete foundation in the ground or sea bed. The tower 6 may comprise one or more tower sections 7, 8, 9. The tower sections 7, 8, 9 are stacked on top of each other when the wind turbine 1 is erected, for example on land or out at sea. The tower sections 7, 8, 9 may be made of concrete or steel. At respective ends, the tower sections 7, 8, 9 may comprise flanges for connecting adjacent tower sections 7, 8 and 8, 9 together, for example, using bolts.

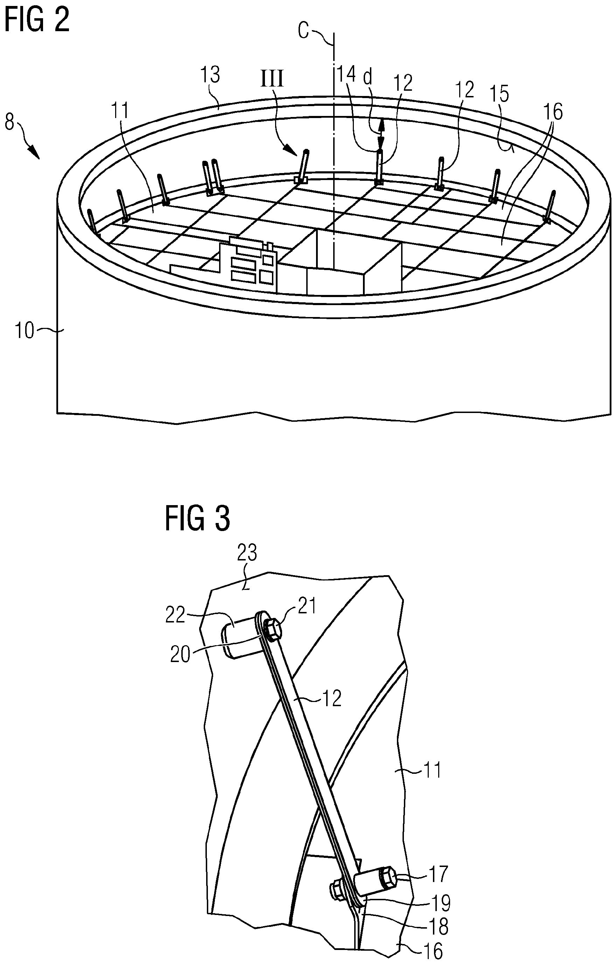

Fig. 2 shows, in a perspective view from slightly above, the tower section 8 from Fig. 1 in an isolated view. The tower section 8 comprises a tower shell 10. The tower shell 10 is shown transparent in its upper portion illustrated in Fig. 2. This provides a view of a platform 11 and a plurality of stays 12 connecting the platform 11 to the tower shell 10.

For example, the tower shell 10 comprises an upper flange 13 which is bolted to a corresponding flange (not shown) of the tower section 9 (see Fig. 1) arranged above the tower section 8. The stays 12 may be bolted to the tower shell 10 below the flange 13. For example, a distance d between the point of attachment 14 of the stay 12 to the tower shell 10 and the bottom surface 15 of the flange 13 may range between, for example, 400 and 700 or 550 and 650 mm.

The platform 11 may be comprised of a plurality of steel plates 16 bolted to a carrying structure (not shown).

Fig. 3 illustrates a detailed view III from Fig. 2. It shows one of the stays 12 connected, at its one end 19 (presently also corresponding to the one ends of the stay elements 24, 25 mentioned hereinafter), with a first bolt 17 to an eye bracket 18. The eye bracket 18 is, e.g., welded to one of the plates 16 of the platform 11. At its other end 20 (presently also corresponding to the other ends of the stay elements 24, 25 mentioned hereinafter), the stay 12 is fastened using a second bolt 21 to a bushing 22 which may be welded to the inner surface 23 of the tower shell 10.

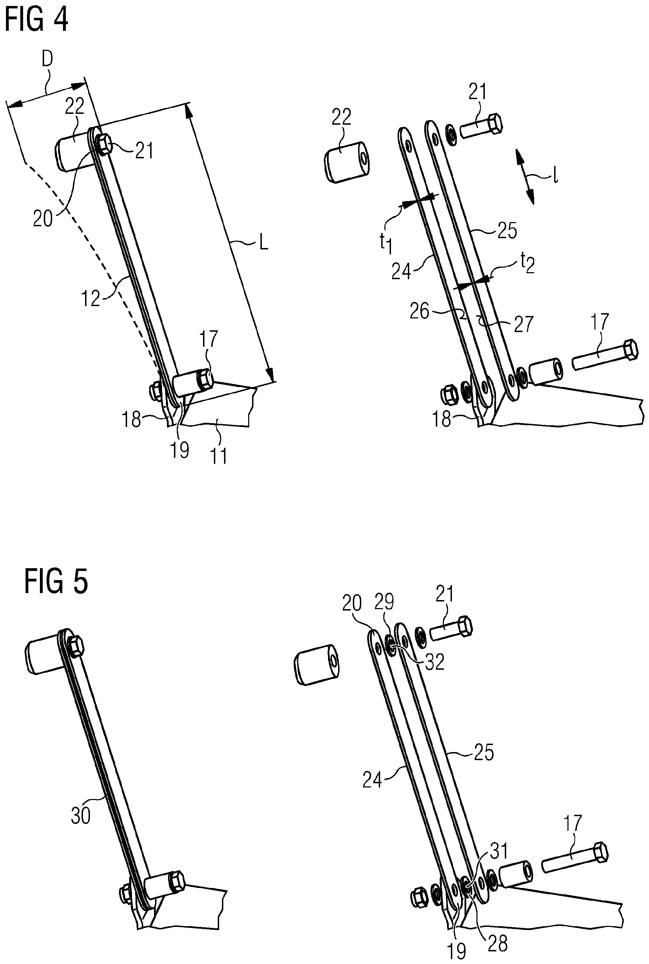

Substantially the same arrangement is shown on the left-hand side of Fig. 4. The right-hand side of Fig. 4 shows the arrangement in an exploded view. In this view it can be seen that the stay 12 is made up of two stay elements 24, 25, each formed from flat steel having a thickness t1, t2. The thicknesses t1 and t2 may be equal and/or may range, for example, from 5 to 20 mm. The two stay elements 24, 25 are arranged in parallel and adjacent to each other, meaning, in the example of Fig. 4, that the stay elements 24, 25 contact each other at their faces 26, 27 facing towards the respective other stay element 24, 25. This in-contact-arrangement is shown on the left-hand side of Fig. 4.

Even though the stay elements 24, 25 are in contact with each other and fastened at respective ends 19, 20 to the platform 11 and the tower shell 10, a sliding movement between the stay elements 24, 25 (or portions thereof) along their lengthwise direction 1 is possible. This occurs when the stay 12 bends or deflects. Fig. 4 shows in a dashed line a deflected state of the stay 12. A maximum deflection D of the stay 12 (modelled as a cantilever beam) may range, for example, between 40 and 70 mm when an ovalization of the tower shell 10 occurs during transport of the tower section 8 with its longitudinal central axis C (see Fig. 2) arranged in the horizontal direction. The stay 12 may have a length L in the range of, for example, 10 to 30 cm, preferably 15 to 25 cm.

Fig. 5 illustrates an alternative embodiment compared to Fig. 4. Therein, two spacer elements 28, 29 are used. The spacer elements 28, 29 are configured as, for example, washers in the embodiment of Fig. 5. The washers 28, 29 ensure that there is a gap 30 between the stay elements 24, 25 when the bolts 17, 21 are tightened. The washers 28, 29 can remove or reduce the friction between the two stay elements 24, 25, by way of the gap 30, when a bending of the stay 12 occurs as explained in connection with Fig. 4.

The washer 28 (also termed "first" washer herein) may be arranged at the one end 19 of the stay 12 and the other washer 29 (also termed "second" washer herein) may be arranged at the other end 20. The washer 28 has a through-hole 31 through which the bolt 17 passes in its tightened state. The washer 29 has a through-hole 32 through which the bolt 21 passes in its tightened state.

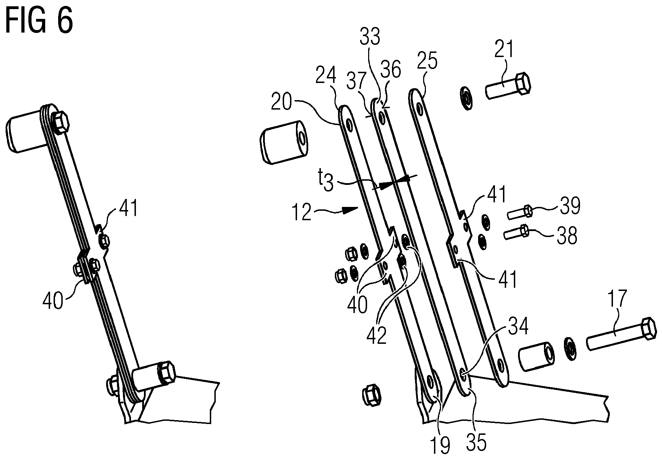

Fig. 6 illustrates a further variant of the stay 12 of Fig. 4. In this case, the stay 12 is comprised of the two stay elements 24, 25 and a third stay element 33. The third stay element 33 is also made of flat steel and may have a thickness t3 which is the same as the thicknesses t1 and t2 (see Fig. 4). The third stay element 33 is arranged in parallel with the stay elements 24, 25 and in between these. The stay element 33 may have a through-hole 34 at its one end 35 and a through-hole 36 at its other end 37. The bolt 17 passes not only through corresponding bolt holes in the one end 19 of the stay elements 24, 25, but also through the through-hole 34 in the one end 35 of the third stay element 33. The bolt 21 passes not only through corresponding bolt holes in the one end 20 of the stay elements 24, 25, but also through the through-hole 36 in the other end 37 of the third stay element 33.

Optionally, in the embodiment of Fig. 6, the stay elements 24, 25 each comprise laterally (perpendicularly with respect to the lengthwise direct l, see Fig. 4) protruding portions 40, 41. For example, one or more bolts 38, 39 pass through the protruding portions 40, 41 and connect these directly without passing through the third stay element 33. Washers 42 between the protruding portions 40, 41, through which the bolts 38, 39 pass on either side of the third stay element 33, ensure that the third stay element 33 is effectively not clamped between the stay elements 24, 25. This reduces the friction between the stay elements 24, 33 and 33, 25 when the stay 12 bends as explained in connection with Fig. 4 on the left-hand side. The protruding portions 40, 41 are preferably provided at a middle section of the stay 12 between the bolts 17 and 21.

Although the present invention has been described in accordance with preferred embodiments, it is obvious for the person skilled in the art that modifications are possible in all embodiments.

## Claims

1. A tower (6) or tower section (7, 8, 9) for a wind turbine (1), comprising:
a tower shell (10),
a platform (11), and
a plurality of stays (12), each stay (12) connecting the platform (11) to the tower shell (10),
wherein each stay (12) is comprised of at least two stay elements (24, 25) arranged in parallel and adjacent to each other, wherein each of the at least two stay elements (24, 25) is connected at its one end (19) to the platform (11) and at its other end (20) to the tower shell (10).

2. The tower or tower section according to claim 1,
wherein the at least two stay elements (24, 25) are in contact with each other.

3. The tower or tower section according to claim 1,
wherein at least one spacer element (28, 29, 42) is arranged between the at least two stay elements (24, 25).

4. The tower or tower section according to claim 3,
wherein a first washer (28) is arranged between the one ends (19) and a second washer (29) is arranged between the other ends (20) of the at least two stay elements (24, 25).

5. The tower or tower section according to one of claims 1 to 4,
wherein a third strut element (33) is arranged between the at least two strut elements (24, 25) and in parallel therewith.

6. The tower or tower section according to claim 5,
wherein the at least two strut elements (24, 25) are directly fastened two each other at a middle section (40, 41) thereof using bolts (38, 39) passing the third strut element (33) on both sides.

7. The tower or tower section according to one of claims 1 to 6,
wherein a first bolt (17) connects the one ends (19) of the at least two stay elements (24, 25) to the platform (11) and a second bolt (21) connects the other ends (20) of the at least two stay elements (24, 25) to the tower shell (11).

8. The tower or tower section according to one of claims 4 to 7,
wherein the first bolt (17) passes through a through hole (31, 34) in the first washer (28) and/or the third stay element (33) and the second bolt (21) passes through a through-hole (32, 36) in the second washer (29) and/or third stay element (33).

9. The tower or tower section according to one of claims 1-8,
wherein the at least two stay elements (24, 25) and/or the third stay element (33) are made of flat steel.

10. The tower or tower section according to one of claims 1-9,
wherein each of the at least two stay elements (24, 25) is connected at its one end (19) to the platform (11) using an eye bracket (18) and at its other end (20) to the tower shell (11) using a bushing (22).

11. A wind turbine comprising the tower (6) or tower section (7, 8, 9) according to one of claims 1-10.
